(19) **Europäisches Patentamt / European Patent Office / Office européen des brevets**

(11) **EP 2 015 576 B1**

(12) **EUROPEAN PATENT SPECIFICATION**

(45) Date of publication and mention
of the grant of the patent:
**27.04.2011 Bulletin 2011/17**

(21) Application number: **08002031.6**

(22) Date of filing: **04.02.2008**

(51) Int Cl.:
*H04N 7/173* (2011.01)       *H04H 60/32* (2008.01)
*H04H 60/31* (2008.01)       *H04N 7/24* (2011.01)
*H04N 5/00* (2011.01)

(54) **Information distribution system, information distribution method, and information display device**

System und Verfahren zur Informationsverteilung sowie Informationsanzeigevorrichtung

Système de distribution d'informations, procédé de distribution d'informations et dispositif d'affichage d'informations

(84) Designated Contracting States:
**DE FR**

(30) Priority: **22.02.2007 JP 2007041575**

(43) Date of publication of application:
**14.01.2009 Bulletin 2009/03**

(73) Proprietor: **Hitachi, Ltd.**
**Chiyoda-ku**
**Tokyo 100-8280 (JP)**

(72) Inventors:
• **Sato, Yoshihito**
**Tokyo 100-8220 (JP)**
• **Ishida, Takaharu**
**Tokyo 100-8220 (JP)**
• **Tomobe,Osamu**
**Tokyo 100-8220 (JP)**

(74) Representative: **Beetz & Partner**
**Patentanwälte**
**Steinsdorfstrasse 10**
**80538 München (DE)**

(56) References cited:
EP-A- 1 343 324        WO-A-00/65576
WO-A-00/72596        WO-A-01/91415
WO-A-98/40816        WO-A-2005/125198
US-A1- 2002 133 393    US-A1- 2003 046 162
US-A1- 2007 169 047

• **AKKOR G ET AL: "A multiple subset sum formulation for feedback implosion suppression over satellite networks" GLOBAL TELECOMMUNICATIONS CONFERENCE, 2005. GLOBECOM '05. IEEE ST. LOIUS, MO, USA 28 NOV.-2 DEC. 2005, PISCATAWAY, NJ, USA,IEEE, vol. 6, 28 November 2005 (2005-11-28), pages 3226-3230, XP010882711 ISBN: 978-0-7803-9414-8**

**Description**

FIELD OF THE INVENTION

The present invention relates to an information display device such as sheet-shaped display device for displaying digital information sent from external communication system, and a system configured to recognize that digital information has arrived at the information display device reliably when digital data is sent to a plurality of display devices.

BACKGROUND OF THE INVENTION

As related art, a sheet-shaped information display device comprising a sheet-shaped visual display unit, a communication means for obtaining visual information to be displayed, and a display control means for display control of the visual information has heretofore been proposed. For example, Japanese Patent Application Laid-Open No. 2002-300506 discloses a technique for displaying only electronic information of a previously specified genre from a huge amount of arbitrary information obtained from digital broadcasting and the like.

In a case where these information display devices are used as large-scale advertising media, it is possible to make display update on a great number of information display devices simultaneously by using an information distribution system such as digital broadcasting. By setting in advance each information display device to display information of a particular genre, different information display devices can display different contents from each other.

In application as advertising media, however, it is anticipated that places where information display devices are installed become a problem. That is, if information is updated by broadcasting, the locations of information display devices are limited to places where broadcast waves reliably arrive.

If display is not updated because broadcast waves do not arrive, the advertisement provider fails to fulfill their liabilities to the advertiser. Therefore, there is a need to ensure that advertisement is displayed certainly. It might be confirmed by reply signaling indicative of update complete, when communication is used. However, a problem of this case is channel congestion due to simultaneous reply messages from a great number of information display devices.

WO 2005/125198 A2 discloses a method and an apparatus to identify viewing information. At least one media signal delivered by a content terminal such as a set top box to a media presentation device such as a television is detected. The media signal includes pixel information that is used to generate one or more images on the television. Encoded viewing information generated at a media consumption side is extracted from the pixel information by a metering device, decoded by the metering device, and then transmitted to a data collection facility for processing.

WO 01/91415 A2 discloses a method of automatically delaying client responses to broadcast uniform resource locators. A client side system may delay the accessing of a URL when instructions are added to said URL of a server that may, e.g., be broadcast via TV. This information may be utilized by software resident on the client side system to delay the accessing of the server to reduce server overloading.

SUMMARY OF THE INVENTION

It is the object of the invention to provide a display confirmation server capable of accomplishing a load dependent timing control of messaging.

This object is accomplished by the features of independent claim 1.

In the present invention, a display confirmation server is provided for confirming that information display has been updated on each information display device. According to one feature of the invention, each information display device sends a reply message that display has updated to information received by digital broadcasting to the display confirmation server.

According to the present invention, it is possible to prevent almost simultaneous reply messages of update complete from being sent from a great number of information display devices, prevent communication traffic concentration to the display confirmation server at a time, and prevent channel congestion.

BRIEF DESCRIPTION OF THE DRAWINGS

FIG. 1 schematizes a first embodiment of an information distribution system applying the present invention.

FIG. 2 schematizes an exemplary information distribution system not falling under the present invention.

FIG. 3 illustrates an example of a sequence in which information display devices are registered with a display confirmation server.

FIG. 4 illustrates an example of update-completion information.

FIG. 5 illustrates an example of sending schedule information.

FIG. 6 illustrates an example of a scheduled recipient device list.

FIG. 7 illustrates an example of a receiving schedule.

FIG. 8 depicts an example of a system framework for explaining a method of determining reply timing.

FIG. 9 illustrates an example of an operation flow that is performed on an information display device.

FIG. 10 illustrates an example of an operation flow that is performed on a display confirmation server.

FIG. 11 illustrates an example of an information display device database.

FIG. 12 illustrates an example of capacity limited channel information.

FIG. 13 illustrates an example of an information display device.

FIG. 14 illustrates an example of a sequence of distribution and reception between master and slave devices.

FIG. 15 illustrates another example of a receiving schedule.

FIG. 16 illustrates a processing flow that is performed on an information display device.

DETAILED DESCRIPTION OF PREFERRED EMBODIMENTS

Embodiments of the present invention will be described below.

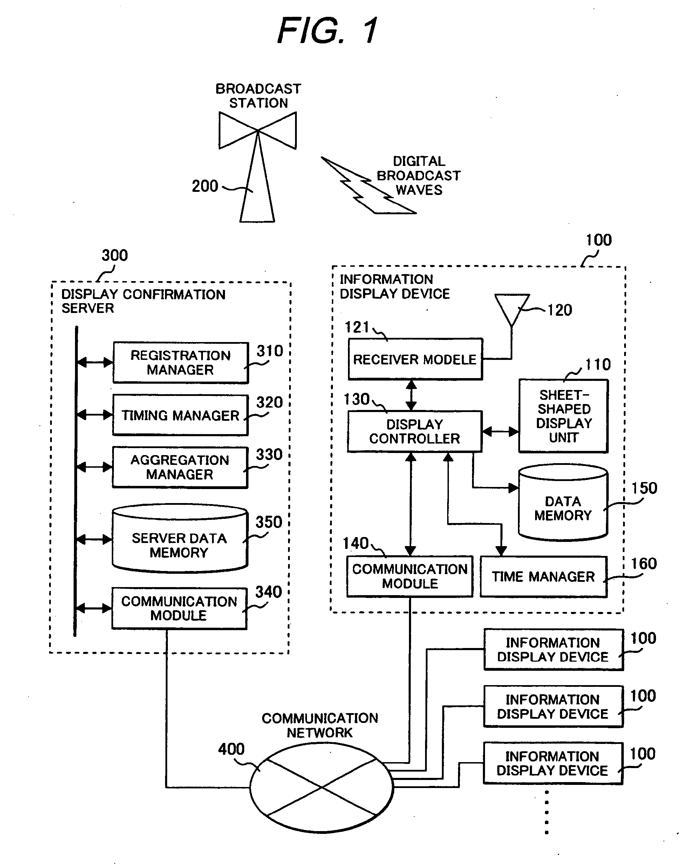

FIG. 1 schematizes a framework of an information distribution system in a first embodiment of the present invention. Information display devices 100 are installed in a wide variety of places as advertising media. Each information display device 100 is connected to a communication network 400 by a wired or wireless communication means and a display confirmation server 300 is also connected to the communication network 400. A broadcast station 200 sends digital broadcast waves on which digital information to be displayed on each information display device 100 is superimposed.

Every information display device 100 receives digital information carried on digital broadcast waves. The digital information includes data to be displayed on the information display device 100. The data is displayed on a sheet-shaped visual display unit 110 of the information display device 100. After displaying the data, each information display device 100 have a waiting time specified by reply timing which is set individually and held therein, and reports that displaying the received data is complete to the display confirmation server 300 via the communication network 400.

Digital broadcast waves arrive at all information display devices at substantially the same time because of the properties of broadcasting used as information distribution means. Contents as visual data display on the sheet-shaped display unit 100 are updated by the received digital data. In case that, immediately after that, all the information display devices 100 make an attempt to access to the display confirmation server 300 via the communication network 400 to report the completion of data reception, there is a possibility of channel capacity overflow on the communication network 400 due to a great number of communication requests. For this reason, in the present invention, different waiting time (reply timing) is set for each individual information display device 100 after updating the display on the sheet-shaped display unit 110, thereby preventing communication overflow.

The information display device 100 is comprised of a receiving antenna 120, a receiver module 121, a display controller 130, a sheet-shaped visual display unit 110, a communication module 140, and a data memory 150. The receiving antenna 120 receives digital broadcast waves. A small-size antenna with a good receiving performance has lately been developed. The receiver module 121 has functions to tune to a given channel from among the digital broadcast waves received by the receiving antenna 120, demodulate and capture digital data. The data memory 150 holds identification information, receiving schedule, and reply timing for the information display device.

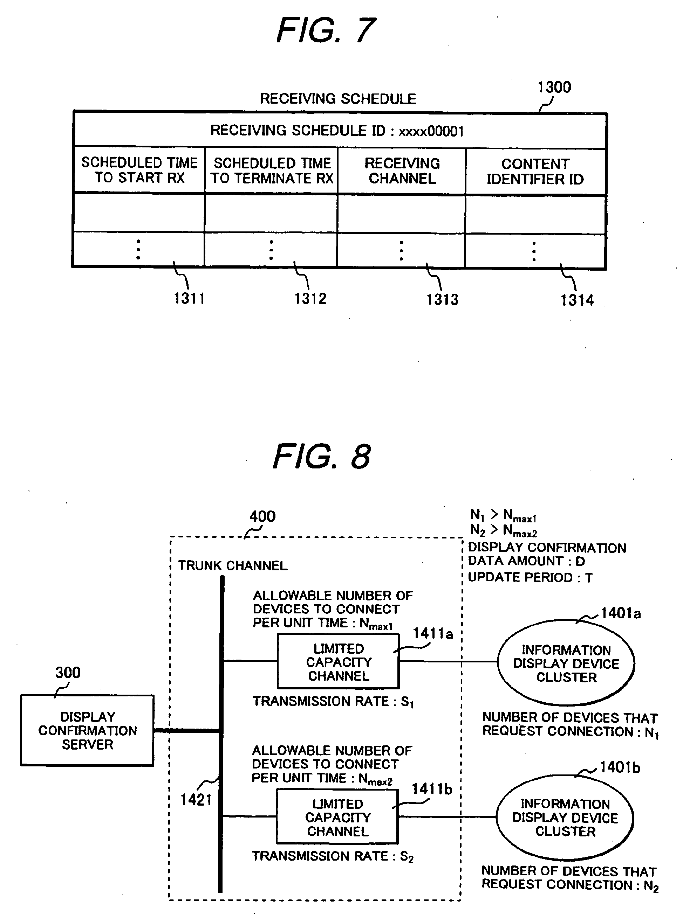

The display controller 130 activates the receiver module 121 in accordance with a receiving schedule 1300 in FIG. 7 to tune to a given channel and capture given contents as visual data. The receiving schedule 1300 is held in the data memory 150. It is easily possible to capture appropriate contents from the digital broadcast waves by using an Electronic Program Guide (EPG), which is used to look for a digital broadcast program, or the like.

An example of a receiving schedule 1300 is shown in FIG. 7. The receiving schedule 1300 contains at least the following data: scheduled reception start time 1311, a receiving channel 1313, and a content identifier ID 1314. A scheduled time for starting of reception is held in the scheduled reception start time 1311. When the scheduled time is coming, the display controller 130 activates the receiver module 121. The receiver module 121 is tuned to a related receiving channel 1313 in the receiving schedule 1310 to receive digital broadcast waves, and gets digital data broadcasted on this channel. The display controller 130 captures contents designated by the content identifier ID 1314 from the digital data. After making sure of successful reception of the specified content, the display controller 130 deactivates the receiver module 121 to reduce power consumption.

The receiving schedule 1300 may include scheduled reception termination time 1312. In this case, regardless of whether reception to contents has successfully finished or not, the display controller 130 can deactivate the receiver module 121 after scheduled time designated by the scheduled reception termination time 1312 has come, and thereby reducing power consumption.

The receiving schedule 1300 is created by a content distributor. For example, provided the contents to be distributed are advertisements, a schedule of broadcasting the contents is decided by both an advertisement provider such as an advertising agency and a broadcaster. The receiving schedule 1300 at the information display devices 100 is generated based on the broadcasting schedule. The generated receiving schedule is held by both the display confirmation server 300 and the broadcast station 200.

Every information display device 100 receives an initial receiving schedule at the time of an initial registration phase to the display confirmation server 300. The initial registration is performed in the beginning of operation. From then on, the receiving schedule is updated by communication via the communication network 400 or by broadcasting one after another. Among them, in the case of updating the receiving schedule by the communication, every time a new receiving schedule for each information display device 100 is generated by the content distributor, it is sent from the display confirmation server 300 to each information display device 100.

On the other hand, in the case of updating the receiving schedule by the broadcasting, it may be carried out by writing specified date/time and specified channel for the coming new receiving schedule in a preceding receiving schedule beforehand. In this case, the content identifier ID 1314 in the preceding receiving schedule 1300 is set as ID for identifying the coming new receiving schedule. When the information display device 100 receives contents via the channel and at the update date/time specified in the preceding receiving schedule, it extracts ID-compliant contents from among the received contents. Therefore, the new receiving schedule can be updated easily from the extracted ID-compliant contents in the information display device 100.

Incidentally, instead of generating a common receiving schedule for all information display devices, it is also possible to generate a plurality of different receiving schedules for respective information display devices. An appropriate receiving schedule can be set for individual information display devices by specifying the identifiers of the information display devices for which that schedule is applied. In this way, for each advertisement contents, it is possible to control setting the area and range in which the contents is displayed. In other words, a series of contents is controlled by a receiving schedule and different contents can be displayed for each group of information display devices. For example, contents A can be displayed on information display devices existing in area A in accordance with a receiving schedule A and contents B can be displayed on information display devices existing in area B in accordance with a receiving schedule B. Furthermore, by distributing these receiving schedules by broadcasting, contents in accordance with the same series of receiving schedules can be continuously updated. If an update in the series of receiving schedule is made for a part of information display devices, the update can be carried out by sending a updated receiving schedule directly to the applicable information display devices by communication.

When getting the contents specified by the receiving schedule in the information display device 100, the display controller 130 issues an instruction, which is to update the display to the visual information according to the received contents, to the sheet-shaped visual display unit 110. The sheet-shaped visual display unit 110 is a thin display with a visual display function capable of updating the visual information. The visual display unit 110 also has a display holding function which, once the visual information is updated, holds the visual information at a low consumption power until a coming update. For a sheet-shaped display capable of updating visual information, the device disclosed in Japanese Patent Application Laid-Open No. 2001-102872 is available.

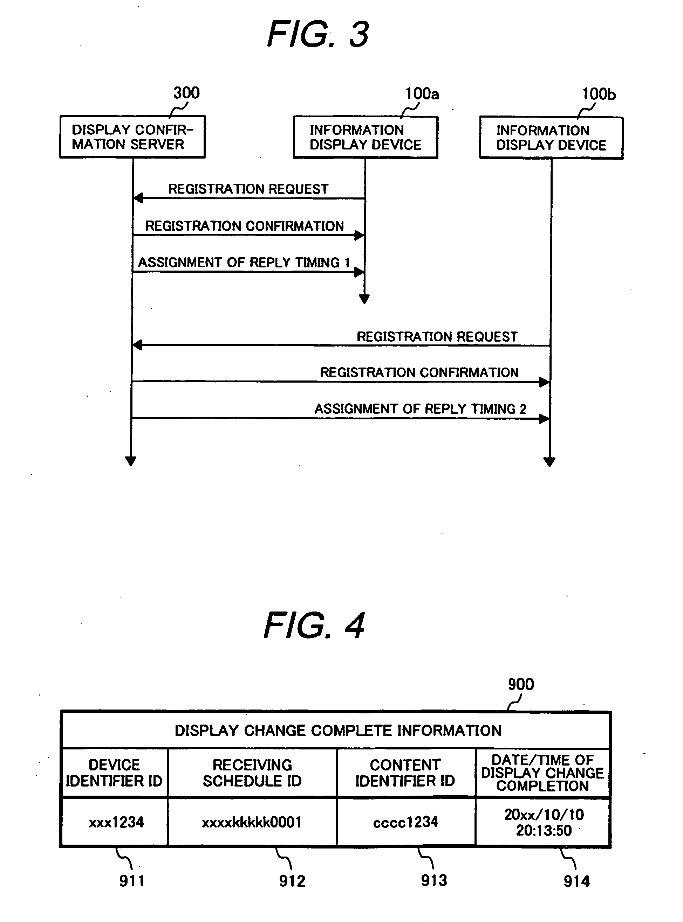

Every time an update of the visual information is completed on the sheet-shaped visual display unit 110, the display controller 130 sends a notice of visual information update-completion to the display confirmation server 300 via the communication module 140. More specifically, the display controller 130 sends the following information to the display confirmation server 300 after a wait for the reply timing since the information display device 100 received the appropriate digital data through digital broadcasting. The information sent from the display controller 130 to the display confirmation server 300 is comprised of: identification information for identifying an individual information display device 100; and update-completion information 900 (refer to FIG. 4) for indicating that updating of the visual information to be displayed on the visual display unit 110 has been completed. Here, the update update-completion information is specified by digital data. The replying time is held in the data memory 150.

An example of the update-completion information 900 is shown in FIG. 4. The update-completion information 900 includes at least the following: device identifier ID 911 which is identification information for identifying the information display device in which the update of the visual information has been completed; content identifier ID 913 for identifying contents updated on the information display; and update-completion date/time 914 for indicating the time when the update of the visual information has been completed.

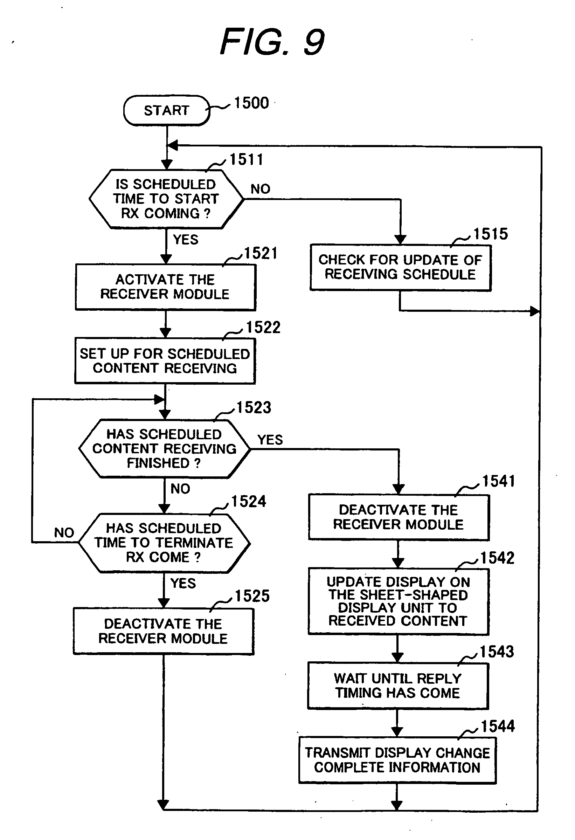

FIG. 9 illustrates an example of a flow chart for the information display device 100. Step 1500 indicates the start of this process. At step 1511, the information display device 100 compares the scheduled reception start time 1311 coming in the nearest future with the present time and determines whether time difference between them is within a predetermined time. Here, the nearest scheduled reception start time 1311 is written in the receiving schedule 1300 (in FIG. 7) held in the data memory 150.

When the time difference is within the predetermined time and the present time is before the scheduled time to start reception, the process proceeds to step 1521. Otherwise the process proceeds to step 1515, where it is checked whether the receiving schedule 1300 has been updated. Then the process returns to step 1511 and processing is performed in accordance with a new receiving schedule when the receiving schedule 1300 has been updated.

At step 1521, the receiver module 121 is activated and starts to receive broadcast waves.

At step 1522, filtering is set up for the receiver module 121 to receive scheduled contents in accordance with the receiving schedule 1300. That is, the receiver module 121 sets the receiving channel 1313 in the receiving schedule 1300 and specifies the content identifier ID 1314 for broadcast contents to be received.

At step 1523, the process waits for a response from the receiver module 121. When the contents specified in the receiving schedule 1300 has been received, the process proceeds to step 1541. When not so, the process proceeds to step 1524. At step 1524, the process determines whether the scheduled reception termination time 1312, which is specified in the receiving schedule 1300, has come. When the scheduled time 1312 to terminate reception has come, the receiver module 121 is deactivated at step 1525 and the process returns to the start point. When the scheduled time 1312 to terminate reception has not come yet, the process returns to step 1523 and continues to wait for a response from the receiver module 121 until the scheduled contents can be received.

At step 1541, where the reception of the scheduled contents has already been completed, the receiver module 121 is deactivated to suppress power consumption. At step 1542, the process extracts visual information from the received contents and the visual display unit 110 updates the visual information to be displayed on the visual display unit. At step 1543, after the completion of the visual information-update on the visual display unit 110, the process waits for time corresponding to predetermined reply timing. After the elapse of the reply timing, the process proceeds to step 1544, where the process generates update-completion information and sends it via the communication module 140 to the display confirmation server 300 and then returns to the start point.

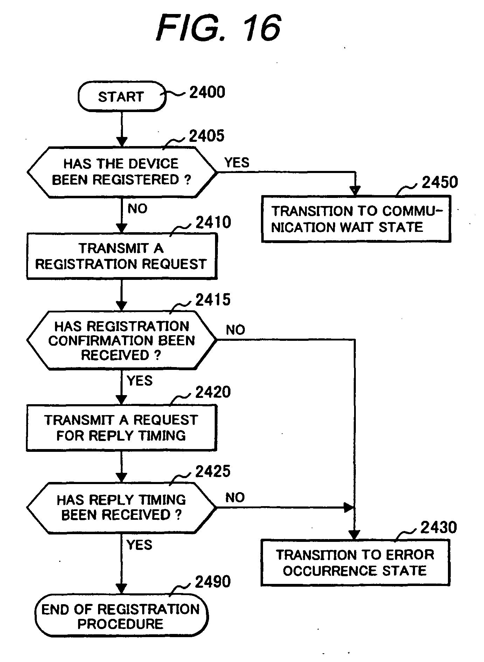

FIG. 16 illustrates a flow chart for information display device 100 when an information display device 100 is newly registered with the display confirmation server 300. This process is performed when the information display device 100 is booted up or reinitialized, and starts at step 2400.

At step 2405, it is determined whether the own information display device 100 has already been registered with the display confirmation server 300. This determination is performed by checking whether valid registration information exists in the data memory 150. When valid registration information exists in the data memory 150, the information display device 100 has already been registered and the process proceeds to step 2450. At step 2450, the process waits for an update, that is, performs the scheduled content receiving process explained in FIG. 9.

Step 2410 and subsequent steps are executed when the information display device 100 was determined at step 2405 not to have been registered with the server 300. At step 2410, the process sends a registration request to the display confirmation server 300. At this time, the process sends at least the device identification information of the own information display device 100. The process may send and receive authentication information in this step. At step 2415, the process makes sure whether registration confirmation information has been returned from the display confirmation server 300 within a predetermined timeout period. When registration confirmation information cannot be received, the process proceeds to an error occurrence state in step 2430.

After the registration confirmation of the own information display device, a request for reply timing is sent at step 2420 to the display confirmation server 300 where the device has been registered. Step 2425 determines whether reply timing information has been received from the display confirmation server 300 within a predetermined timeout period. When reply timing information is received successfully, the process proceeds to step 2490. When this information fails to be received, the process proceeds to an error occurrence state in step 2430. Steps 2420 and 2425 are omissible when the process is configured to receive reply timing together with registration confirmation information from the display confirmation server 300. At step 2490, a notice of reception of reply timing is sent back to the display confirmation server 300 and the registration process terminates. As above stated, the information display device 100 is registered with the display confirmation server 300 and receives reply timing.

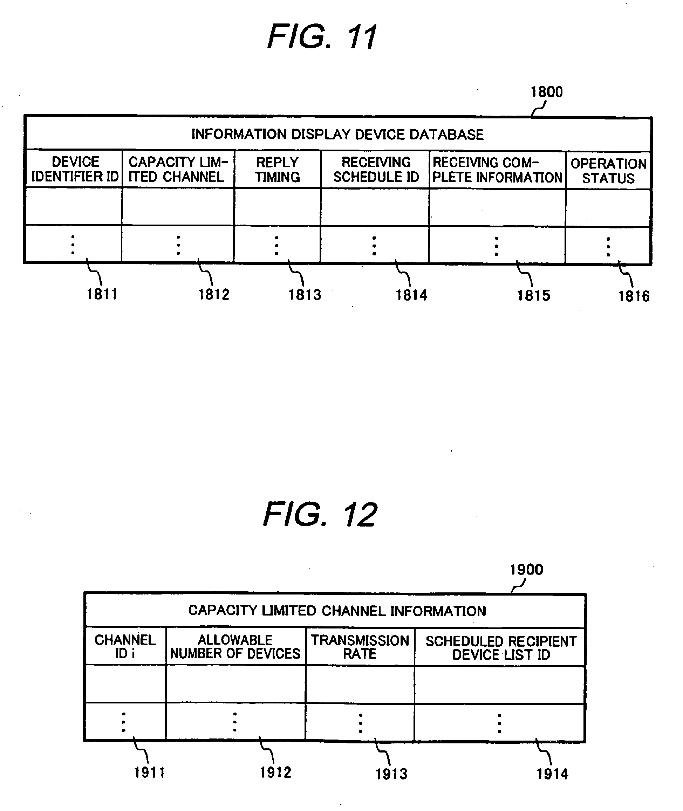

The display confirmation server 300 in the system framework diagram shown in FIG. 1 is comprised of a registration manager 310, a timing manager 320, a summarization manger 330, a communication module 340, and a server data memory 350. The server data memory 350 contains an information display device database 1800 in FIG. 11 that holds sending schedule of contents and registration information as to the information display devices 100.

The registration manager 310 has a function of registering an information display device 100 managed by the display confirmation server 300 to make the registered information display device 100 manageable. It also has a function of deregistering an information display device 100 for which management has become unnecessary and terminating management of the device 100.

The timing manager 320 has a function of generating respectively reply timings for information display device 100 registered with the server 300. That is, the timing manager 320 generates reply timing by shifting them so that the number of information display devices capable of sharing a channel at the same time does not exceed the allowable number of devices for the channel; and when generating the reply timings, the timing manager 320 takes account of all the registered information display devices capable of sharing a channel and their reply timings.

The display confirmation server 300 is connected to the communication network 400, such as Internet, via the communication module 340.

The summarization manager 330 receives update-completion information from the information display devices 100 via the communication module 340 and grasps which information display device and which content has been updated. The summarization manager 330 has a function that compares update-completion information from each information display device 100 with the sending schedule distributed to the information display device 100. The summarization manager 330 also has a function that checks and manages whether the visual information on the respective information display devices 100 has been updated as specified in the sending schedule, based on a result of the above-mentioned comparison.

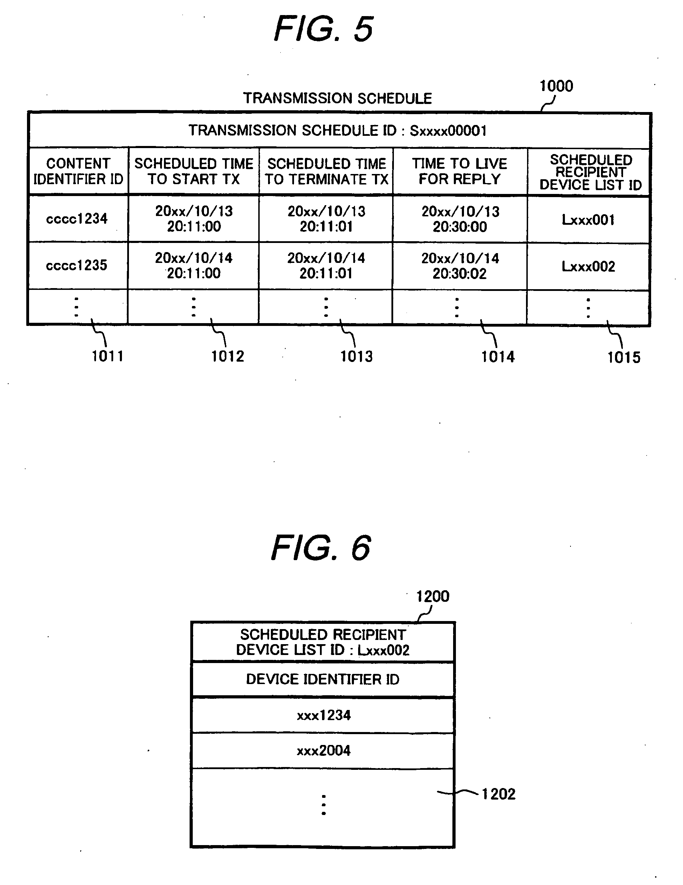

An example of a sending schedule is shown in FIG. 5. The sending schedule 1000 consists of at least the following: content identifier ID 1011 for identifying contents to be sent to any scheduled recipient device as scheduled recipient information display device; scheduled sending start time 1012 for sending the contents to the scheduled recipient device; reply time limit 1014 for indicating a time limit as to arrival of update-completion information from each recipient device information display device; and scheduled recipient device list ID 1015 for identifying scheduled recipient device ID-lists 1200. Each of the scheduled recipient device ID-lists 1200 is comprised of a plurality of devise identifiers ID 1202 (FIG. 6). The scheduled recipient device ID-list 1200 in FIG. 6 is information for managing the device identifiers ID 1202 of the scheduled recipient devices (information display devices 100) which are scheduled to receive specified contents. In particular, each of the scheduled recipient device ID-lists 1200 has fields of the device identifiers ID 1202 assigned to the scheduled recipient devices (information display devices 100). That is, the sending schedule 1000 corresponds to all the receiving schedules, and includes the following: information for identifying that which contents should be displayed by which information display device namely scheduled recipient information display device; and information as to a display confirmation time limit for each contents, namely time limit information for identifying that each contents should be displayed until when.

The update-completion information 900 which is received from each information display device 100, includes the content identifier ID 913 thereof. The summarization manager 330 compares the content identifier ID 913 with the content identifier ID 1011 included in the sending schedule 1000. As a result of the comparison, the summarization manager 330 searches the scheduled sending start time 1012 and the scheduled recipient device list ID 1015 which are related to the received content identifier ID 913.

Furthermore, the summarization manager 330 searches whether the device identifier ID911 included in the update-completion information 900 is also listed in the scheduled recipient device ID-list 1200 identified by the scheduled recipient device list ID 1015. When the device identifier ID 911 is included in the recipient device ID-list 1200, the update completion date/time 914 of the update-completion information 900 is further compared with the scheduled sending start time 1012 of the sending schedule 1000, by the summarization manager 330.

When the visual information to be updated is confirmed to have been updated within a predetermined time, the summarization manager 300 determines that the information display device 100 having sent the update-completion information 900 is normally functioning. When the device identifier ID 911 is not included in the recipient device ID-list 1200, or when the visual information is not updated within the predetermined time, the summarization manager 300 determines that the information display device 100 is malfunctioning.

The server data memory 350 holds sending schedules of contents sent via digital broadcasting, device identification information of registered information display devices, results of display confirmations of the information display devices, and results of determination as to whether the operation of each information display device is normal or faulty.

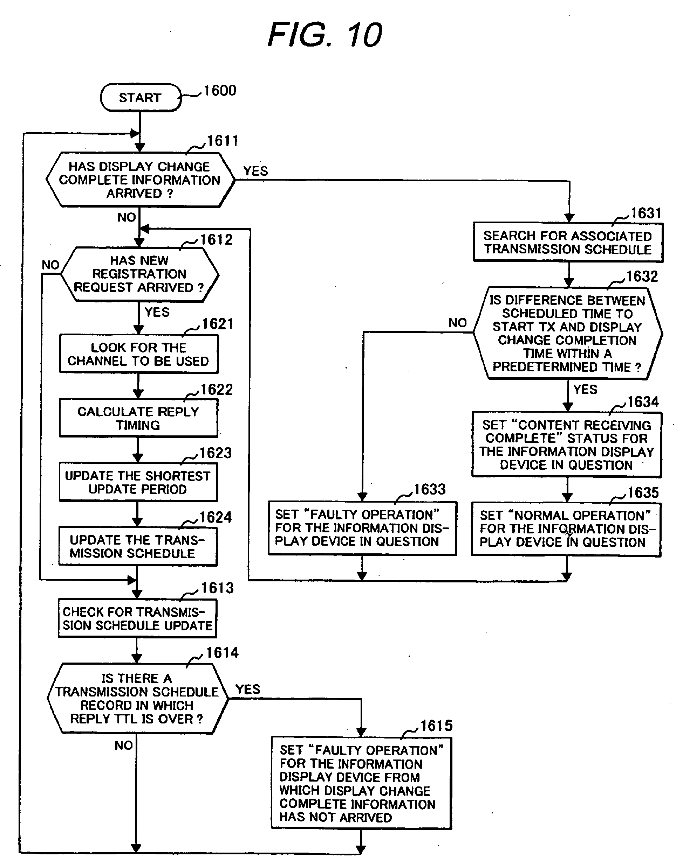

FIG. 10 illustrates an example of a process flow that is performed on the display confirmation server 300. The process on the display confirmation server 300 starts at step 1600. The process at step 1611 detects whether update-completion information 900 has been received via communication. When update-completion information 900 has been received, the process executes step 1631; otherwise the process proceeds to step 1612.

At step 1612, the process determines whether a new registration request has arrived. When the request has arrived, the process executes step 1621; when not so, the process proceeds to step 1613.

At step 1631, when update-completion information 900 has been received, the process searches a sending schedule in the server data memory 350. The sending schedule has the content identifier ID 1011 corresponding to the content identifier ID 911 in the update-completion information 900.

At step 1632, the process obtains the scheduled sending start time 1012 of the content from the searched sending schedule. Then, the process determines whether a difference between the obtained scheduled sending start time 1012 and the update-completion date/time 914 in the update-completion information 900 falls within a predetermined time. When the difference falls within the predetermined time, the process proceeds to step 1634; when not so, the process proceeds to step 1633.

At step 1634, any information display device having sent the update-completion information 900, determines that its related contents is in a "content receiving complete" state and records the state into the information display device database 1800 in FIG. 11. Concretely, in the information display device database 1800, the state is recorded into receiving complete information 1815 as a field of the device identifier ID 1811 corresponding to the identifier ID of the information display device. Then the process proceeds to step 1635 and determines that the information display device having sent the update-completion information 900 is in a "normal operation" state. After that, in the information display device database 1800, the process records the "normal state" into an operation state 1816 as the field of the device identifier ID 1811 corresponding to the device identifier ID of the information display device. After the step 1635, the process proceeds to step 1612.

At step 1633, the process comes in the case that the difference between the display update-completion date/time 914 and the scheduled sending start time 1012 exceeds the predetermined time, the process regards the information display device having sent the update-completion information 900 as in a "faulty operation" state. Then the process records the state into the information display device database 1800. Concretely, in the information display device database 1800, the state is recorded into the operation state 1816 as a field of the device identifier ID 1811 corresponding to the identifier ID of the information display device. After the step 1633, the process proceeds to step 1612.

When it is determined that a new registration request has arrived at step 1612, the requested information display device will newly be registered in steps 1621 to 1624.

At step 1621, the process identifies the channel to be used for the information display device from the address in the communication network 400, which is used by the information display device having sent the registration request, based on the network configuration information. According to the identified channel information, the process at the next step 1622 obtains the number of other information display devices connected to the channel and a sending capacity of the channel from the information display device database 1800. Using the obtained the data (the number of other information display devices and the sending capacity of the channel), the process calculates reply timing for the information display device having sent the registration request. At step 1623, the process updates a shortest update time described below. At step 1624, to the information display device with the registration request, the process returns a notification of registration approval, the receiving schedule 1300 for the information display device, and reply timing information by communication. After step 1624, the process goes to step 1613.

At step 1613, the process checks whether a sending schedule 1000 has been updated. At step 1614, the process checks the sending schedules 1000 and looks for a sending schedule record in which the time limit for reply is overdue. When such a record exists, the process executes step 1615; otherwise the process returns to step 1611. At step 1615, the process lists up and obtains the device identifiers ID of all scheduled recipient information display devices with the above over-due record from the scheduled recipient device list ID 1015. Further, for each device identifier ID obtained above, when "content receiving complete" state is not recorded, the process regards the device as in a "faulty operation" state and registers the "faulty state" in the field of the operation state 1816 corresponding to the device identifier ID obtained above.

FIG. 3 illustrates a sequence diagram in which two information display devices 100a and 100b are registered with the display confirmation server 300. An information display device 100a is connected to the display confirmation server 300 via the communication module 140 and sends a registration request together with its device identifier ID. The display confirmation server 300 receives the device identifier ID and the registration request from the information display device 100a via the communication module 340. The registration manager 310 in the display confirmation server 300 registers the information display device 100a. The timing manager 320 generates reply timing 1 for the registered information display device 100a. At this time, the upper limit number of devices to simultaneously communicate is determined on the channel used by the information display device 100a, and reply timing 1 is assigned so that the number of the devices does not exceed the upper limit number within a time period for display confirmation.

A method of generating reply timing is explained using FIG. 8. In FIG. 8, an example of the communication network 400 in FIG. 3 is depicted in detail. The communication network 400 can be divided into two kinds of channels: a trunk channel 1421 and capacity limited channels 1411a and 1411b. In the example of FIG. 8, there are two capacity limited channels 1411a and 1411b for the following explanation. The trunk channel 1421 is a channel for the display confirmation server 300 and has a sufficient channel capacity. The capacity limited-channels 1411a and 1411b have limited channel capacities which overflow if all information display devices attempt to communicate on the channel at the same time. As examples of the capacity limited-channels 1411a and 1411b, channels including some base stations in a mobile communication network or a communication network for fixed-line phones are given.

These capacity limited-channels 1411a and 1411b are able to carry communication traffic at a transmission rate of $S_1$ [bit/sec] and $S_2$ [bit/sec], respectively. From the upper limit number of devices to simultaneously communicate on the capacity limited channels 1411a and 1411b, the allowable number of connected devices to the channel per unit time is predefined as follows: $N_{max1}$ for the channel 1411a and $N_{max2}$ for the channel 1411b. These values are determined by arrangement with a carrier and the like when the present information distribution system is designed.

FIG. 12 illustrates an example of a table of capacity limited channel information 1900, which manages information about the capacity limited channels. The capacity limited channel information 1900 includes the following: channel ID 1911 for identifying a capacity limited channel, the allowable number of devices 1912 within which devices can simultaneously connect to the channel per unit time, transmission rate 1913, and scheduled recipient device list ID 1914. Management of the capacity limited channel information 1900 can relate the parameters of each capacity limited channel to the information display devices 100 that use the capacity limited channel for connection.

In FIG. 8, information display device clusters 1401a and 1401b represent the $N_1$ number of information display devices 100 and the $N_2$ number of information display devices 100, respectively. The clusters 1401a and 1401b are connected to the capacity limited channels 1411a and 1411b respectively, and eventually connected to the trunk channel 1421.

Then, Providing $N_1 \leq N_{max1}$ and $N2 \leq N_{max2}$, no problem arises, even if the information display devices 100 simultaneously receive contents, which is distributed by digital broadcast waves and update the display on the sheet-shaped visual display unit 110), and, in consequence, attempt to simultaneously transfer update-completion information 900 to the display confirmation server 300 via the communication network 400.

However, in order to utilize the information display devices 100 as effective advertising media that a greater number of people can watch, the system needs to equip a greater number of information display devices 100, where $N_1 > N_{max1}$ and $N2 > N_{max2}$.

In the present invention, the timing manager 320 calculates for capacity limited channel i a reply timing interval $T_{ri}$ from the data amount D [bits], which is necessary for update-completion information 900, and transmission rate $S_i$ of the capacity limited channel i. This reply timing interval $T_{ri}$ is calculated to fulfill the following constraint:

**[Mathematical expression 1]**

$$T_{ri} \geq \frac{D}{S_i} \, .$$

The $N_1$ number of information display devices in the information display device cluster 1401a, for example, is divided into subsets of the $N_{max1}$ number of devices in the timing manager 320. The timing manager 320 sets reply timing to 0 for the first subset of the $N_{max1}$ number of devices. Then, it sets reply timing to $T_{ri}$ [sec] for the second subset of the $N_{max1}$ number of devices. Further it sets reply timing to $T_{ri} + T_{ri} = 2T_{ri}$ [sec] for the third subset of the $N_{max1}$ number of devices. Subsequently, it sets reply timing incremented by $T_{ri}$ [sec] for each further subset of the $N_{max1}$ number of devices.

As described above, by setting reply timing with the reply timing interval $T_{ri}$ as the time period for display confirmation, the number of the connected information display devices that send update-completion information 900 on each capacity limited channel i can be controlled to be always equal to or less than the allowable number $N_{max1}$.

In this example, the same reply timing is set for the maximum number $N_{max1}$ of information display devices. Alternatively, each information display device may finely adjust the reply timing assigned to it by using a random number in smaller units than the reply timing interval. This adjustment can prevent the number $N_{max1}$ of information display devices to which the same reply timing was assigned from starting communication synchronously. That is, the communication module 140 of an information display device 100 to which a reply timing $T_a$ [sec] was assigned generates a random number between the reply timing $T_a$ [sec] and $T_a + T_{ri}$, and starts to send update-completion information 900 to the display confirmation server 300 at timing when the random number is generated.

In this case, an update period is required before all information display devices connected to capacity limited channel 1411a and 1411b start to send update-completion information 900. The shortest update period T [sec] is expressed as follows:

**[Mathematical expression 2]**

$$T = T_{ri} \cdot \frac{N_i}{N_{max \, i \, d}} \, .$$

The update period of the sending schedule 1000 and the receiving schedule 1300 should be set not to be shorter than the shortest update period T. The reply time limit 1014 in the sending schedule 1000 is determined based on the shortest update period T.

The above description applies to a case where the time needed for updating the content on the sheet-shaped visual display unit 110 is sufficiently short in each information display device 100. Meanwhile, in a case where the time required to update the content is so long as to affect reply timing, a maximum time for content update $T_d$ [sec] should be introduced and set. The reply timing should be determined taking account of $T_d$. That is, the reply timing is determined to fulfill the following constraint:

**[Mathematical expression 3]**

$$T_{ri} \geq \frac{D}{S_i} + T_d \, .$$

Here, the maximum time for content update d $T_d$ is estimated in advance according to the rendering performance of the information display device 100 and the data amount of the content to be displayed.

Returning to FIG. 3, reply timing 1 from the display confirmation server 300 is stored into the data memory 150 in the information display device 100a. Likewise, the display confirmation server 300 returns registration confirmation and reply timing 2 in response to a registration request from the information display device 100b. The information display device 100b receives reply timing 2 and stores it in the data memory 150.

FIG. 11 illustrates an example of an information display device database 1800. The information display device database 1800 consists of at least the following: device identifier ID 1811, capacity limited channel ID 1812, reply timing 1813, receiving complete information 1815, and operation state 1816. The device identifier ID 1811 identifies an individual information display device. The capacity limited channel ID 1812 is used by the information display device. The reply timing 1813 is assigned to the information display device. The receiving complete information 1815 holds "content receiving complete" information representing that the information display device operates normally and completed receiving the specified content based on the receiving schedule. The operation state 1816 indicates whether the operation of the information display device is "normal" or "faulty".

The display confirmation server 300 stores this information display device database 1800 in the server data memory 350 and performs the process illustrated in FIG. 10, using the information display device database 1800.

The information display device 100 is also provided with a time manager 160, which manages the present time and provides the present time by request from the display controller 130. With a time manager 160, the information display device 100 has a function to accept the time specified by the display controller 130 as the present time, that is, it newly sets the present time specified by the display controller 130. The information display device 100 also has a function to subsequently update the present time in it in accordance with time elapsed since when the present time was set by the display controller 130. The time manager 160 always needs to keep correct time and this is possible due to the correction using the time information data extracted from the received digital broadcast waves.

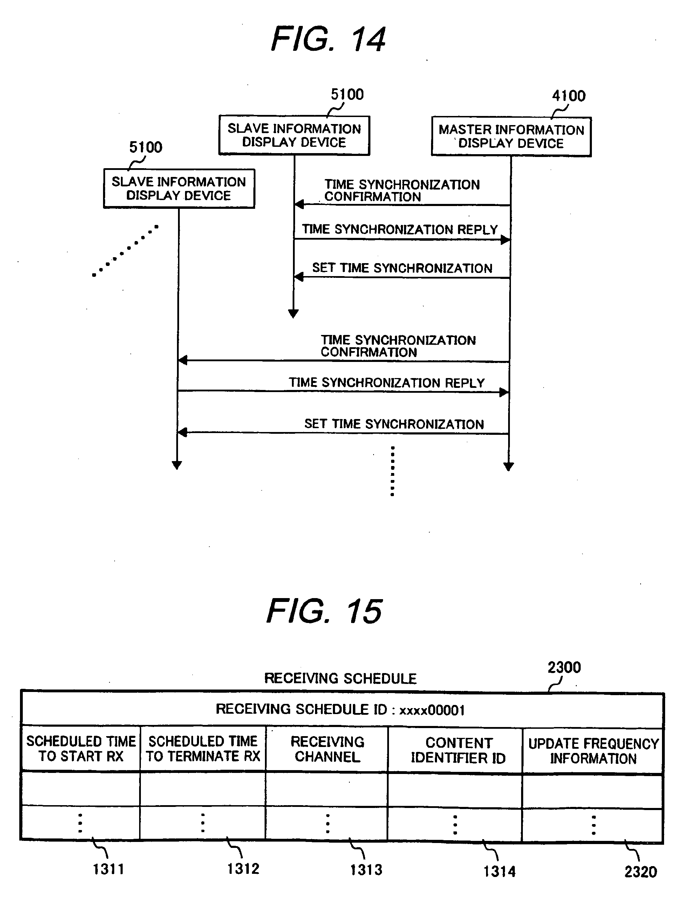

FIG. 15 illustrates an example of another receiving schedule 2300 which is used in the first embodiment of the present invention. In this example, the schedule information in receiving schedule 2300 is arranged to allow a general confirmation that all the information display devices update the display correctly, instead of individually confirming it. Thereby, it is possible to update the content in an update period less than the maximum update time.

The receiving schedule 2300 has update frequency information 2320 in addition to the receiving schedule 1300 shown in FIG. 7. When an information display device 100 receives a content identified by a content identifier ID 1314, it determines whether to send update-completion information 900 with reference to the update frequency information 2320 related to the specific content identifier ID 1314.

For example, provided probability data is used for update frequency information 2320 and the update frequency information 2320 is 0.2 in the receiving schedule 2300, all information display devices which received the content specified in the receiving schedule 2300 is controlled to send update-completion information 900 at the probability of 20%.

Meanwhile, the display confirmation server 300 stores the sending number of update-completion information 900 from each information display device after the update starts. It compares the sending number to the expected sending number of update-completion information, which is equal to the product of content update number and update frequency information 2320. Then it executes probabilistic calculation to determine whether the operation state of each information display device is normal or faulty.

In the probabilistic calculation, it is estimated whether the operation state of each information display device is normal or faulty on the following assumption: the coincidence probability of the update-completion information sending number and its expected number conforms to a given probabilistic distribution; and using a statistical test method for the probability that the sending number falls within a certain range less than the expected value. For example, when the update frequency is 0.2 and the number of content updates is specified as 50 times and provided the actually received number of update-completion information 900 is 6, the test is performed as below to determine whether the information display device has sent the update-completion information 900 at the probability of 20%.

Provided the probabilistic distribution is a binominal distribution, a cumulative probability is obtained as 0.1034, wherein the sending number of update-completion information 900 becomes less than 6 with regard to 50 times of content update. Given a rejection region of 5%, this cumulative probability is greater than 0.05. Hence, the information display device is not regarded as faulty in operation.

When the sending number of the update-completion information 900 is 12 with regard to 100 times of content update, a cumulative probability is obtained as 0.0111, which is less than the rejection region of 0.05. In this case, the information display device is regarded as faulty in operation.

In this way, the number of information display devices to send update-completion information 900 is reduced to a proportion specified by the update frequency information 2320. Thus, provided the update frequency is 0.2, the content update period can be reduced to one-fifth of the maximum time for content update. The operation state of each information display device can be confirmed statistically.

As a probabilistic value used for update frequency information 2320, a ratio of the content update period to the maximum time for content update can be used instead of the proportion in which each information display device sends the update-completion information 900.

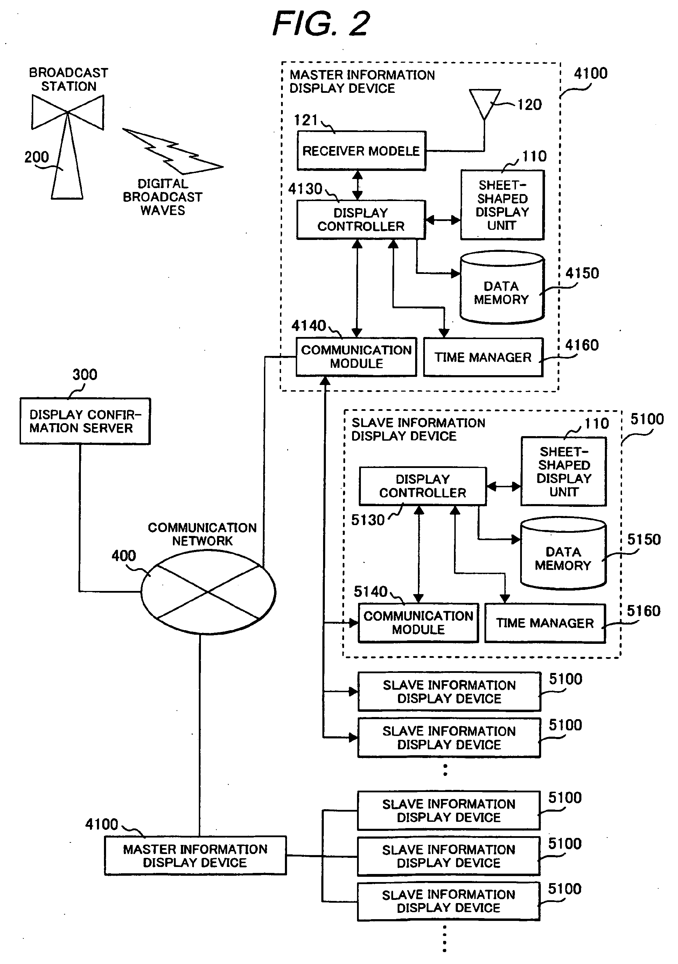

FIG. 2 schematizes a framework for an exemplary system not falling under the present invention.

The system framework is different from that shown in FIG. 1 in the following respects. The system has two kinds of information display devices: master information display devices 4100 and slave information display devices 5100. The master information display devices 4100 alone are connected to the communication network 400 and the slave information display devices 5100 are only connected via the master information display devices 4100, whereas all information display devices 100 in the framework shown in FIG. 1 are directly connected to the communication network 400. In addition, only the master information display devices 4100 receive digital broadcast waves.

Each master information display device 4100 basically has the same configuration as an information display device 100 in FIG. 1, which means it is composed of a receiving antenna 120 for digital broadcasting, a receiver module 121, a display controller 4130, a communication module 4140, a sheet-shaped visual display unit 110, and a data memory 4150. However, the communication module 4140 has a local communication means besides an external communication means for the communication network 400, resulting in enhancement of the communication efficiency. Various communication means are applicable for the local communication means such as wired LAN, wireless LAN, and other short-range wireless communication means.

The receiver module 121 has functions to receive and demodulate signals of digital broadcast waves, extract digital data specified by the display controller 4130, and provide that data to the display controller 4130. The display controller 4130 receives broadcast data in digital broadcast waves, extracts necessary data from among predetermined broadcast data, and sends the extracted data to the slave information display devices 5100 via the local communication means.

Each slave information display device 5100 is composed of a sheet-shaped visual display unit 110, a display controller 5130, a communication module 5140, and a data memory 5150. The communication module 5140 has a local communication means and is connected wirelessly or wiredly to the master information display device 4100.

This system framework provides an advantageous effect of easier adjusting of the reply timing since the number of master information display devices 4100, which directly communicate with the display confirmation server 300, gets less. It gives another advantageous effect that the slave information display devices 5100 can be installed anywhere, even in a place where digital broadcast waves do not arrive, while only the master information display devices 4100 are installed in a location where digital broadcast waves certainly arrive.

Furthermore, as is the case shown in FIG. 1, the master information display devices 4100 and the slave information display devices 5100 may be provided with time mangers 4160, 5160, respectively, for management of the present time.

In a master information display device 4100, it is possible to correctly adjust the time kept by the time manager 4160 at all times, using time information included in received digital broadcast waves. On the other hand, a slave information display device 5100 cannot receive digital broadcast waves directly and its present time is corrected by obtaining time information via local communication with the master information display device 4100.

FIG. 14 illustrates a communication sequence for time correction. The present time data is sent from the master information display device 4100 and received by the slave information display device 5100. Both the master device 4100 and the slave one 5100 measure a time required for this communication. From a measurement result, a difference is detected between the time measured by the master information display device 4100 and one by the slave information display device 5100. The present time kept by the time manager 5160 in the slave information display device 5100 is corrected, based on the time difference, in synchronization with the present time on the master information display device 4100. This time correction process is performed for each slave information display device 5100, which is managed by the master information display device 4100.

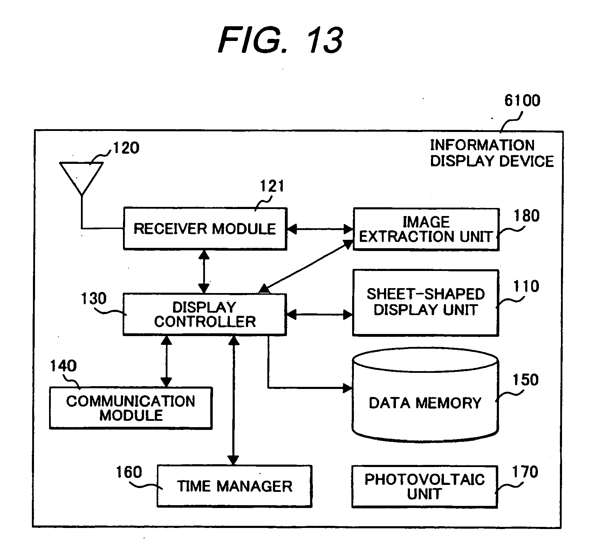

FIG. 13 illustrates a further exemplary information display device. The information display device 6100 shown in FIG. 13 differs from the information display device 100 in FIG. 1 in that it includes an image extraction unit 180 and a photovoltaic unit 170. The image extraction unit 180 analyzes digital data for a moving image, which is obtained from digital broadcast waves received by the receiver module 121, and extracts visual information for a still image. This extraction is realized by using, e.g. , an MPEG-2 decoder or an H.264 decoder.

The display controller 130 makes the receiver module 121 tune to a channel specified by the receiving channel 1313 and the scheduled reception starting time 1311 in the receiving schedule 1300 in FIG. 7. The tuned receiver module 121 receives content for a moving image distributed on the receiving channel 1313.

The image extraction unit 180 clips a whole region or a applicable region in one or more frames out of the received moving image and passes it to the display controller 130. The display controller 130 displays and controls the received image on the sheet-shaped visual display unit 110. In this way, the display controller 130 can handle an image extracted by the image extraction unit 180 as a predefined content. In this case, it is unnecessary to superimpose the content of the extracted image on broadcast waves separately from ordinary broadcasting. A part of information which is already carried on broadcast waves can be used for the content of the extracted image, too.

The display controller 130 can display a still image extracted by the image extraction unit 180 and a predefined content alternately and cyclically. In this case, an image from ordinary broadcasting is displayed to draw the attention of advertising target public and then a predefined content is displayed.

The photovoltaic unit 170 eliminates the use of power supply to the devices or prolongs the battery life.

## Claims

1. A display confirmation server (300) that manages notifications on display states at a plurality of information display devices capable of receiving broadcast information for being displayed, the display confirmation server comprising:

a registration manager (310) for registering the information display devices into a management list;
a data memory (350) for holding the management list;
a communication module (340) for communicating with plural information display devices via a communication network (400) and a capacity-limited communication channel (1411a, 1411b);
a summarization manager (330) for managing notifications of completion, of the update of the display of broadcast information to be displayed as said notifications on the display state, the notifications being sent from the plurality of information display devices via the capacity-limited communication channel with respective time differences after displaying received broadcast information by the information display devices;
a timing manager (320) that generates time difference data with reference to the capacity (Si) of the capacity-limited communication channel and with reference to the number (Ni) of registered display devices using said capacity limited communication channel indicating said time difference given to each information display device, the time difference data being generated so that the number of information display devices sharing the communication channel (1411a, 1411b) of the communication network (400) at the same time becomes equal to or less than an allowable number (Nmax), and
wherein the server communication module is adapted to notify the time difference data, to each information display device via the communication network in response to a registration request from each of said information display devices.

2. An information distribution system comprising:

a plurality of information display devices (100), each comprising visual display unit (110) that updates a displayed broadcast information under control of a display controller (130) rendering display control for the broadcast information for updating the displayed information on the visual display unit; and
a display confirmation server (300) according to claim 1,
wherein the display confirmation server and the information display devices are connected to each other via said communication network (400) and said capacity limited communication channel (1411a, 1411b), and
wherein each of the information display devices comprises:

a communication module (140) for communicating witch the display confirmation server (300) via one of said capacity limited communication channels (1411a, 1411b) and the communication network (400);
a receiving module (121) for receiving contents sent via digital broadcast waves;
a data memory (150) for holding time difference data indicating said time difference between end of update of the broadcast information by the display control and sending a notification of completion of the update to the display confirmation server by the device communication module; and the time difference having been given to the data memory by the display confirmation server in response to said registration request,
wherein the update controlled by the display controller is notified to the display confirmation server by the device communication module after a wait for at least the time difference.

## Patentansprüche

1. Anzeigebestätigungsserver (300), der Benachrichtigungen über Anzeigezustände auf mehreren Informationsanzeigevorrichtungen verwaltet, welche imstande sind, Rundfunkinformationen zu empfangen, damit diese angezeigt werden, mit:

einem Eintragungsmanager (310) zum Eintragen der Informationsanzeigevorrichtungen in eine Verwaltungsliste;
einem Datenspeicher (350) zum Halten der Verwaltungsliste;
einem Kommunikationsmodul (340) zum Kommunizieren mit mehreren Informationsanzeigevorrichtungen über ein Kommunikationsnetz (400) und einen kapazitätsbeschränkten Kommunikationskanal (1411a, 1411b);
einem Zusammenfassungsmanager (330) zum Verwalten von Benachrichtigungen über den Abschluss der Aktualisierung der Anzeige von Rundfunkinformationen, die als die Benachrichtigungen über den Anzeigezustand anzuzeigen sind, wobei die Benachrichtigungen von den mehreren Informationsanzeigevorrichtungen über den kapazitätsbeschränkten Kommunikationskanal mit jeweiligen Zeitdifferenzen nach dem Anzeigen empfangener Rundfunkinformationen durch die Informationsanzeigevorrichtungen

einem Zeiteinstellungsmanager (320), der die Zeitdifferenzdaten bezüglich der Kapazität (Si) des kapazitätsbeschränkten Kommunikationskanals und bezüglich der Anzahl (Ni) eingetragener Anzeigevorrichtungen unter Verwendung des kapazitätsbeschränkten Kommunikationskanals erzeugt, der die jeder Informationsanzeigevorrichtung gegebene Zeitdifferenz anzeigt, wobei die Zeitdifferenzdaten so erzeugt werden, dass die Anzahl von Informationsanzeigevorrichtungen, die sich den Kommunikationskanal (1411a, 1411b) des Kommunikationsnetzes (400) zur gleichen Zeit teilen, gleich oder kleiner als eine zulässige Anzahl (Nmax) wird, und wobei das Serverkommunikationsmodul dazu angepasst ist, die Zeitdifferenzdaten jeder Informationsanzeigevorrichtung über das Kommunikationsnetz als Antwort auf eine Eintragungsanfrage von jeder der Informationsanzeigevorrichtungen mitzuteilen.

**2.** Informationsverteilungssystem mit:

mehreren Informationsanzeigevorrichtungen (100), die jeweils eine Visuellanzeigeeinheit (110) umfassen, die eine angezeigte Rundfunkinformation unter Steuerung einer Anzeigesteuerung (130) aktualisiert, die eine Anzeigesteuerung für die Rundfunkinformation zum Aktualisieren der angezeigten Information auf der Visuellanzeigeeinheit erbringt; und

einem Anzeigebestätigungsserver (300) nach Anspruch 1,

wobei der Anzeigebestätigungsserver und die Informationsanzeigevorrichtungen über das Kommunikationsnetz (400) und den kapazitätsbeschränkten Kommunikationskanal (1411a, 1411b) miteinander verbunden sind, und

wobei jede der Informationsanzeigevorrichtungen umfasst:

ein Kommunikationsmodul (140) zum Kommunizieren mit dem Anzeigebestätigungsserver (300) über einen der kapazitätsbeschränkten Kommunikationskanäle (1411a, 1411b) und das Kommunikationsnetz (400);

ein Empfangsmodul (121) zum Empfangen von Inhalten, die über Digitalrundfunkwellen gesendet werden;

einen Datenspeicher (150) zum Halten von Zeitdifferenzdaten, die die Zeitdifferenz zwischen dem Ende der Aktualisierung der Rundfunkinformationen durch die Anzeigesteuerung und dem Senden einer Benachrichtigung über den Abschluss der Aktualisierung an den Anzeigebestätigungsserver durch das Vorrichtungskommunikationsmodul anzeigen; und wobei die Zeitdifferenz dem Datenspeicher durch den Anzeigebestätigungsserver als Antwort auf die Eintragungsanfrage gegeben worden ist, wobei die von der Anzeigesteuerung gesteuerte Aktualisierung dem Anzeigebestätigungsserver von dem Vorrichtungskommunikationsmodul nach einer Wartezeit von mindestens der Zeitdifferenz mitgeteilt wird.

## Revendications

**1.** Serveur de confirmation d'affichage (300) qui gère des notifications sur l'état d'affichage d'une pluralité de dispositifs d'affichage d'informations pouvant recevoir des informations diffusées en vue d'être affichées, le serveur de confirmation d'affichage comprenant :

un gestionnaire d'enregistrement (310) destiné à enregistrer les dispositifs d'affichage d'informations dans une liste de gestion ;

une mémoire de données (350) destinée à contenir la liste de gestion ;

un module de communication (340) destiné à communiquer avec la pluralité de dispositifs d'affichage d'informations par l'intermédiaire d'un réseau de communication (400) et d'une voie de communication à capacité limitée (1411a, 1411b) ;

un gestionnaire de récapitulation (330) destiné à gérer les notifications d'achèvement de la mise à jour de l'affichage des informations diffusées en vue d'être affichées comme lesdites notifications sur l'état d'affichage, les notifications étant envoyées à partir de la pluralité de dispositifs d'affichage d'informations par l'intermédiaire de la voie de communication à capacité limitée avec des écarts de temps respectifs après l'affichage des informations diffusées reçues par les dispositifs d'affichage d'informations ;

un gestionnaire de temps (320) qui génère des données d'écart de temps en fonction de la capacité (Si) de la voie de communication à capacité limitée et en fonction du nombre (Ni) de dispositifs d'affichage enregistrés utilisant ladite voie de communication à capacité limitée indiquant ledit écart de temps fourni à chaque dispositif d'affichage d'informations, les données d'écart de temps étant générées de sorte que le nombre de dispositifs d'affichage d'informations partageant la voie de communication (1411a, 1411b) du réseau de communication (400) en même temps devienne égal ou inférieur à un nombre admissible (Nmax), et

Dans lequel le module de communication du serveur est adapté pour notifier les données d'écart de temps à chaque dispositif d'affichage d'informations par l'intermédiaire du réseau de communication en réponse à une demande d'enregistrement de chacun desdits dispositifs d'affichage d'informations.

2.  Système de distribution d'informations comprenant :

une pluralité de dispositifs d'affichage d'informations (100), chacun comprenant une unité d'affichage visuel (110) qui met à jour des informations diffusées affichées sous le contrôle d'un contrôleur d'affichage (130) produisant le contrôle de l'affichage pour les informations diffusées afin de mettre à jour les informations affichées sur l'unité d'affichage visuel ; et

un serveur de confirmation d'affichage (300) selon la revendication 1,

dans lequel le serveur de confirmation d'affichage et les dispositifs d'affichage d'informations sont reliés les uns aux autres par l'intermédiaire dudit réseau de communication (400) et de ladite voie de communication à capacité limitée (1411a, 1411b), et

dans lequel chacun des dispositifs d'affichage d'informations comprend :

un module de communication (140) destiné à communiquer avec le serveur de confirmation d'affichage (300) par l'intermédiaire desdites voies de communication à capacité limitée (1411a, 1411b) ou du réseau de communication (400) ;

un module de réception (121) destiné à recevoir le contenu envoyé au moyen d'ondes de diffusion numériques ;

une mémoire de données (150) destinée à contenir les données d'écart de temps indiquant ledit écart de temps entre la fin de la mise à jour des informations diffusées par le contrôle de l'affichage et l'envoi d'une notification d'achèvement de la mise à jour au serveur de confirmation d'affichage par le module de communication du dispositif ; et

l'écart de temps ayant été fourni à la mémoire de données par le serveur de confirmation d'affichage en réponse à ladite demande d'enregistrement,

dans lequel la mise à jour contrôlée par le contrôleur d'affichage est notifiée au serveur de confirmation d'affichage par le module de communication du dispositif après une attente correspondant au moins à l'écart de temps.

# FIG. 1

BROADCAST
STATION

200

DIGITAL
BROADCAST
WAVES

100

300

**DISPLAY CONFIRMATION SERVER**

REGISTRATION MANAGER 310

TIMING MANAGER 320

AGGREGATION MANAGER 330

SERVER DATA MEMORY 350

COMMUNICATION MODULE 340

**INFORMATION DISPLAY DEVICE**

120

121

RECEIVER MODELE

110

SHEET-SHAPED DISPLAY UNIT

130

DISPLAY CONTROLLER

150

DATA MEMORY

140

COMMUNICATION MODULE

TIME MANAGER 160

INFORMATION DISPLAY DEVICE 100

INFORMATION DISPLAY DEVICE 100

COMMUNICATION NETWORK

400

INFORMATION DISPLAY DEVICE 100

# FIG. 2

# FIG. 3

| 300 | 100a | 100b |
|---|---|---|
| DISPLAY CONFIR- MATION SERVER | INFORMATION DISPLAY DEVICE | INFORMATION DISPLAY DEVICE |

REGISTRATION REQUEST

REGISTRATION CONFIRMATION

ASSIGNMENT OF REPLY TIMING 1

REGISTRATION REQUEST

REGISTRATION CONFIRMATION

ASSIGNMENT OF REPLY TIMING 2

# FIG. 4

900

| DISPLAY CHANGE COMPLETE INFORMATION | | | |
|---|---|---|---|
| DEVICE IDENTIFIER ID | RECEIVING SCHEDULE ID | CONTENT IDENTIFIER ID | DATE/TIME OF DISPLAY CHANGE COMPLETION |
| xxx1234 | xxxxkkkkk0001 | cccc1234 | 20xx/10/10 20:13:50 |

911              912              913              914

# FIG. 5

TRANSMISSION SCHEDULE 1000

| TRANSMISSION SCHEDULE ID : Sxxxx00001 | | | | |
|---|---|---|---|---|
| CONTENT IDENTIFIER ID | SCHEDULED TIME TO START TX | SCHEDULED TIME TO TERMINATE TX | TIME TO LIVE FOR REPLY | SCHEDULED RECIPIENT DEVICE LIST ID |
| cccc1234 | 20xx/10/13 20:11:00 | 20xx/10/13 20:11:01 | 20xx/10/13 20:30:00 | Lxxx001 |
| cccc1235 | 20xx/10/14 20:11:00 | 20xx/10/14 20:11:01 | 20xx/10/14 20:30:02 | Lxxx002 |
| ⋮ | ⋮ | ⋮ | ⋮ | ⋮ |

1011    1012    1013    1014    1015

# FIG. 6

1200

| SCHEDULED RECIPIENT DEVICE LIST ID : Lxxx002 |
|---|
| DEVICE IDENTIFIER ID |
| xxx1234 |
| xxx2004 |
| ⋮ |

1202

# FIG. 7

RECEIVING SCHEDULE 1300

| RECEIVING SCHEDULE ID : xxxx00001 | | | |
|---|---|---|---|
| SCHEDULED TIME TO START RX | SCHEDULED TIME TO TERMINATE RX | RECEIVING CHANNEL | CONTENT IDENTIFIER ID |
| | | | |
| ⋮ | ⋮ | ⋮ | ⋮ |

1311    1312    1313    1314

# FIG. 8

$N_1 > N_{max1}$
$N_2 > N_{max2}$
DISPLAY CONFIRMATION
DATA AMOUNT : D
UPDATE PERIOD : T

400

TRUNK CHANNEL

ALLOWABLE NUMBER OF DEVICES TO CONNECT PER UNIT TIME : $N_{max1}$

1411a

LIMITED CAPACITY CHANNEL

TRANSMISSION RATE : $S_1$

300

DISPLAY CONFIRMATION SERVER

1401a

INFORMATION DISPLAY DEVICE CLUSTER

NUMBER OF DEVICES THAT REQUEST CONNECTION : $N_1$

ALLOWABLE NUMBER OF DEVICES TO CONNECT PER UNIT TIME : $N_{max2}$

1411b

1421

LIMITED CAPACITY CHANNEL

TRANSMISSION RATE : $S_2$

1401b

INFORMATION DISPLAY DEVICE CLUSTER

NUMBER OF DEVICES THAT REQUEST CONNECTION : $N_2$

# FIG. 9

START ~1500

1511
IS SCHEDULED
TIME TO START — NO
RX COMING ?

YES

1521
ACTIVATE THE
RECEIVER MODULE

~1515
CHECK FOR UPDATE OF
RECEIVING SCHEDULE

1522
SET UP FOR SCHEDULED
CONTENT RECEIVING

1523
HAS SCHEDULED
CONTENT RECEIVING — YES
FINISHED ?

NO

1524
HAS SCHEDULED
NO — TIME TO TERMINATE
RX COME ?

YES

1525
DEACTIVATE THE
RECEIVER MODULE

1541
DEACTIVATE THE
RECEIVER MODULE

1542
UPDATE DISPLAY ON
THE SHEET-SHAPED
DISPLAY UNIT TO
RECEIVED CONTENT

1543
WAIT UNTIL REPLY
TIMING HAS COME

1544
TRANSMIT DISPLAY CHANGE
COMPLETE INFORMATION

# FIG. 10

START ~1600

HAS DISPLAY CHANGE
COMPLETE INFORMATION
ARRIVED ? ~1611 — YES →

NO ↓

HAS NEW
REGISTRATION
REQUEST ARRIVED ? ~1612

NO →

YES ↓

LOOK FOR THE
CHANNEL TO BE USED ~1621

↓

CALCULATE REPLY
TIMING ~1622

↓

UPDATE THE SHORTEST
UPDATE PERIOD ~1623

↓

UPDATE THE TRANS-
MISSION SCHEDULE ~1624

↓

CHECK FOR TRANSMIS-
SION SCHEDULE UPDATE ~1613

↓

IS THERE A
TRANSMISSION SCHEDULE
RECORD IN WHICH
REPLY TTL IS OVER ? ~1614 — YES →

NO

SET "FAULTY OPERATION"
FOR THE INFORMATION
DISPLAY DEVICE FROM
WHICH DISPLAY CHANGE
COMPLETE INFORMATION
HAS NOT ARRIVED ~1615

SEARCH FOR ASSOCIATED
TRANSMISSION SCHEDULE ~1631

↓

IS DIFFERENCE BETWEEN
SCHEDULED TIME TO
START TX AND DISPLAY
CHANGE COMPLETION
TIME WITHIN A
PREDETERMINED TIME ? ~1632 — NO →

YES ↓

SET "CONTENT RECEIVING
COMPLETE" STATUS FOR
THE INFORMATION DISPLAY
DEVICE IN QUESTION ~1634

↓

SET "FAULTY OPERATION"
FOR THE INFORMATION DIS-
PLAY DEVICE IN QUESTION ~1633

SET "NORMAL OPERATION"
FOR THE INFORMATION DIS-
PLAY DEVICE IN QUESTION ~1635

20

# FIG. 11

1800

| INFORMATION DISPLAY DEVICE DATABASE | | | | | |
|---|---|---|---|---|---|
| DEVICE IDENTIFIER ID | CAPACITY LIM-ITED CHANNEL | REPLY TIMING | RECEIVING SCHEDULE ID | RECEIVING COM-PLETE INFORMATION | OPERATION STATUS |
| | | | | | |
| ⋮ | ⋮ | ⋮ | ⋮ | ⋮ | ⋮ |

1811      1812      1813      1814      1815      1816

# FIG. 12

1900

| CAPACITY LIMITED CHANNEL INFORMATION | | | |
|---|---|---|---|
| CHANNEL ID i | ALLOWABLE NUMBER OF DEVICES | TRANSMISSION RATE | SCHEDULED RECIPIENT DEVICE LIST ID |
| | | | |
| ⋮ | ⋮ | ⋮ | ⋮ |

1911      1912      1913      1914

# FIG. 13

6100

INFORMATION
DISPLAY DEVICE

120

121

RECEIVER MODULE

IMAGE
EXTRACTION UNIT  180

130

DISPLAY
CONTROLLER

SHEET-SHAPED
DISPLAY UNIT  110

140

COMMUNICATION
MODULE

DATA MEMORY  150

160  TIME MANAGER

PHOTOVOLTAIC
UNIT  170

# FIG. 14

5100

SLAVE INFORMATION
DISPLAY DEVICE

5100

SLAVE INFORMATION
DISPLAY DEVICE

4100

MASTER INFORMATION
DISPLAY DEVICE

TIME SYNCHRONIZATION
CONFIRMATION

TIME SYNCHRONIZATION REPLY

SET TIME SYNCHRONIZATION

TIME SYNCHRONIZATION
CONFIRMATION

TIME SYNCHRONIZATION REPLY

SET TIME SYNCHRONIZATION

# FIG. 15

RECEIVING SCHEDULE

2300

| RECEIVING SCHEDULE ID : xxxx00001 | | | | |
|---|---|---|---|---|
| SCHEDULED TIME TO START RX | SCHEDULED TIME TO TERMINATE RX | RECEIVING CHANNEL | CONTENT IDENTIFIER ID | UPDATE FREQUENCY INFORMATION |
| | | | | |
| ⋮ | ⋮ | ⋮ | ⋮ | ⋮ |

1311　　　　　1312　　　　　1313　　　　　1314　　　　　2320

# FIG. 16

```
        ┌──────────┐
        │  START   │── 2400
        └──────────┘
             │
             ▼
      ╱──────────────╲  ── 2405
     ╱  HAS THE DEVICE ╲    YES          ┌───────────────────┐
     ╲  BEEN REGISTERED ?╱ ─────────────▶│ TRANSITION TO COMMU- │ ── 2450
      ╲──────────────╱                    │ NICATION WAIT STATE  │
             │ NO                         └───────────────────┘
             ▼  ── 2410
     ┌──────────────────┐
     │   TRANSMIT A      │
     │ REGISTRATION REQUEST│
     └──────────────────┘
             │
             ▼  ── 2415
      ╱──────────────╲
     ╱ HAS REGISTRATION ╲   NO
     ╲ CONFIRMATION BEEN ╱ ──────────────┐
      ╲   RECEIVED ?   ╱                  │
       ╲──────────────╱                   │
             │ YES                        │
             ▼  ── 2420                   │
     ┌──────────────────┐                 │
     │ TRANSMIT A REQUEST│                 │
     │  FOR REPLY TIMING │                 │
     └──────────────────┘                 │
             │                            │
             ▼  ── 2425                   │
      ╱──────────────╲                    │
     ╱ HAS REPLY TIMING ╲   NO            ▼
     ╲ BEEN RECEIVED ?  ╱ ───────────────▶
      ╲──────────────╱                 ── 2430
             │ YES               ┌──────────────────┐
             ▼  ── 2490          │ TRANSITION TO ERROR│
     ┌──────────────────┐        │  OCCURRENCE STATE │
     │ END OF REGISTRATION│       └──────────────────┘
     │    PROCEDURE      │
     └──────────────────┘
```

**REFERENCES CITED IN THE DESCRIPTION**

**Patent documents cited in the description**

- JP 2002300506 A
- WO 2005125198 A2
- WO 0191415 A2
- JP 2001102872 A